# EUROPEAN PATENT APPLICATION

(11) **EP 2 898 973 A2**
(43) Date of publication of application: **29.07.2015**
(21) Application number: 15150477.6
(22) Date of filing: 08.01.2015
(51) Int. Cl.: B23H 1/10, B23H 7/10

(54) **Working fluid supply control apparatus for a wire electric discharge machine**

(30) Priority: 23.01.2014 JP 2014010321
(71) Applicant: FANUC CORPORATION, Oshino-mura Minamitsuru-gun Yamanashi 401-0597 (JP)
(72) Inventor: Yoshida, Masayuki, Minamitsuru-gun, Yamanashi 401-0597 (JP); Kawahara, Akiyoshi, Minamitsuru-gun, Yamanashi 401-0597 (JP); Nakashima, Yasuo, Minamitsuru-gun, Yamanashi 401-0597 (JP)
(74) Representative: Ward, James Norman

(57) **Abstract**

A working fluid supply control apparatus for a wire electric discharge machine including a first pump (15a) supplying a working fluid through an upper nozzle (3a) and a second pump (15b) that supplies the working fluid through a lower nozzle (3b) independently of each other is provided. A supply amount of the working fluid supplied through the first pump (15a) is controlled such that the actual pressure of the working fluid supplied through the upper nozzle (3a) follows a preset target value. Control over the supply amount of the working fluid supplied through the lower nozzle (3b) is performed similarly to and independently of the control over the supply amount of the working fluid supplied through the upper nozzle (3a).

## Description

### BACKGROUND OF THE INVENTION

### 1. Field of the Invention

The present invention relates to a working fluid supply control apparatus used for a wire electric discharge machine.

### 2. Description of the Related Art

A wire electric discharge machine applies a voltage to a machining gap between a wire electrode (hereinafter referred to as "wire") and a workpiece to cause discharge. At the same time, the wire electric discharge machine uses a servo motor to change the relative position between the wire and the workpiece to machine the workpiece into a desired shape while supplying a working fluid into the machining gap. In general, the working fluid is supplied through nozzles provided above and below the machining gap, and an electric discharge machining section uses the working fluid to discharge machining chips from the machining gap and to cool the machining gap.

Thus, conventional control over the working fluid is performed by maintaining the pressure of the supplied working fluid (hereinafter referred to as "working fluid pressure") at a constant value or a predetermined value, controlling the flow rate of the working fluid (hereinafter referred to as "working fluid amount"), and maintaining a sufficient supply amount of the working fluid supplied to the electric discharge machining section, thereby allowing electric discharge machining to be stabilized.

Japanese Patent Application Laid-Open No. 2002-254250 discloses a technique for controlling the flow rate of a working fluid in accordance with the number of discharge pulses. Japanese Patent Application Laid-Open No. 4-261713 discloses a working fluid supply control apparatus that controls the discharge amount of a variable discharge pump provided for each of upper and lower nozzle supply paths so that a detected pressure of a working fluid follows a pressure value instructed by a command value. Japanese Patent Application Laid-Open No. 11-48040 discloses a control method of ejecting a working fluid at a constant pressure, and reducing pulsed electric power when the detected flow rate of the working fluid is determined to fall out of an appropriate range. Japanese Patent Application Laid-Open No. 2001-87946 discloses a working fluid supply control method of detecting the pressure of a working fluid, determining a limiting value for the pressure so that the amount of delay (or vibration) in a wire electrode is kept at a preset level or smaller, and controlling the operation of a pump so as to maintain the pressure at the limiting value or lower.

Japanese Patent Application Laid-Open No. 6-39645 discloses a method of controlling an electric discharge machine, including steps of: actuating a first pump to set a working fluid flow rate condition needed for a first discharge port; and actuating a second pump to set a working fluid flow rate condition needed for a second discharge port. Japanese Patent Application Laid-Open No. 10-43947 discloses a working fluid jetting apparatus which detects the pressure of a working fluid in a pressure pocket provided in each of upper and lower working fluid supply nozzles, and which controls the supply amount of the working fluid or the supply pressure of the working fluid so as to set the detected fluid pressure to a desired value. Japanese Patent No. 5166586 discloses a technique of adjusting the balance between the amounts or pressures of the working fluid supplied by upper and lower working fluid supply apparatuses so as to eliminate uneven distribution of machining chips. Japanese Patent Application Laid-Open No. 5-154717 discloses an electric discharge machining method of setting optimum machining conditions based on a detected working fluid pressure and a machining plate thickness calculated by a numerical controller.

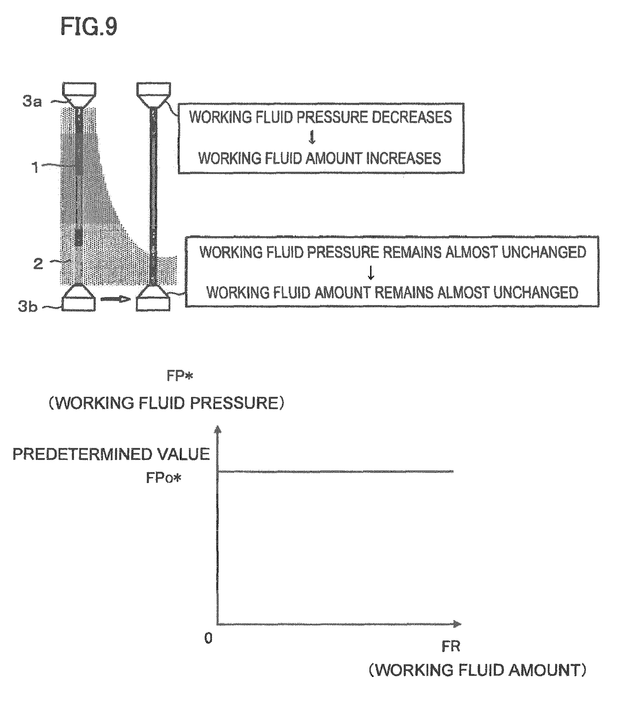

The conventional techniques for working fluid control pose the following problems. FIG. 9 illustrates an example of conventional control over the supply of the working fluid.

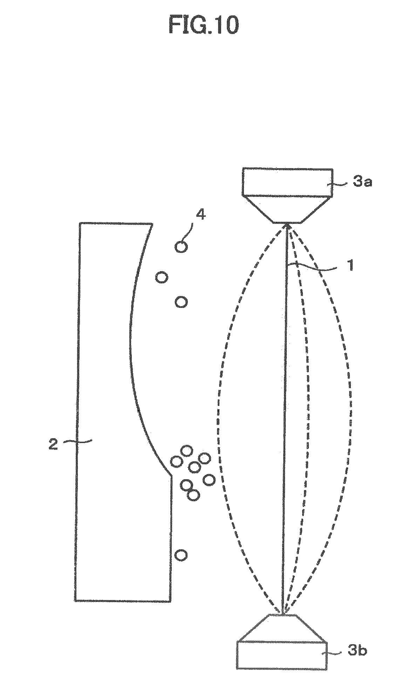

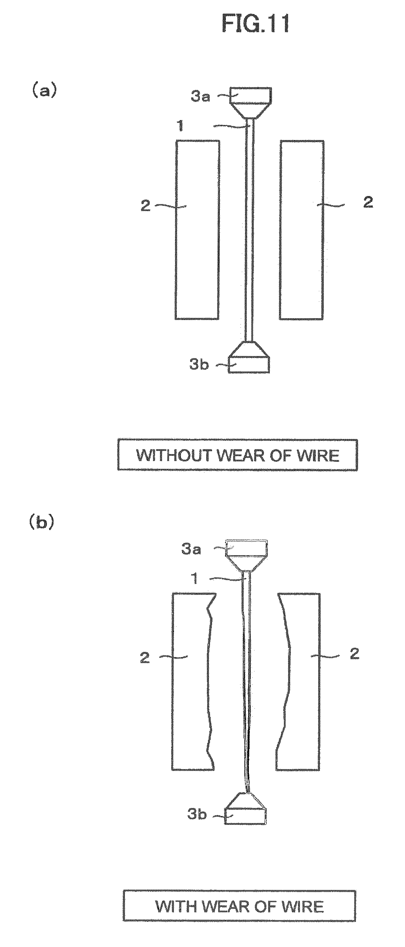

With a wire 1 and a workpiece 2 moved relative to each other, wire electric discharge machining is performed. At this time, a working fluid is ejected through each of upper and lower nozzles 3a and 3b. When an attempt is made to maintain the pressure of the working fluid constant in a machining path in which the working fluid pressure decreases, the working fluid amount increases. The increase in the working fluid amount causes the increase in the degree of wire vibration to degrade machining accuracy (see FIG. 10). Furthermore, the wire 1 is susceptible to vibration if the wire 1 is worn, thereby possibly generating machining stripes resulting from wire vibration caused by the increase in the working fluid amount. Moreover, the wear of the wire 1 resulting from electric discharge machining causes the machining amount to vary between above the workpiece 2 and below the workpiece 2, and also causes the vibration of the wire 1 to vary between above the workpiece 2 and below the workpiece 2, thereby possibly generating machining stripes in a lower portion of the workpiece 2 (see FIG. 11). The wire 1 is fed from the upper nozzle 3a toward the lower nozzle 3b as shown in FIG. 9.

### SUMMARY OF THE INVENTION

An object of the present invention is, therefore, to provide a working fluid supply control apparatus for a wire electric discharge machine which enables stable electric discharge machining even in a machining path in which an electric discharge machining condition varies.

A working fluid supply control apparatus for a wire electric discharge machine includes two pumps provided independently of each other; one for supplying a working fluid to a gap between a wire electrode and a workpiece through an upper nozzle, and the other for supplying a working fluid to the gap through a lower nozzle. The working fluid supply control apparatus includes: a pressure setting section that sets a target value for a pressure of the working fluid supplied through each of the upper and lower nozzles in accordance with an electric discharge machining condition; a pressure detection section that detects the pressure of the working fluid supplied through each of the upper and lower nozzles; and a working fluid supply control section that controls a supply amount of the working fluid supplied by each of the pumps through each of the upper and lower nozzles independently so that a value of the pressure of the working fluid through each of the upper and lower nozzles detected by the pressure detection section follows the target value for the pressure of the working fluid through each of the upper and lower nozzles set by the pressure setting section.

In a case of the working fluid supply control apparatus for the wire electric discharge machine according to the present invention, the wire electric discharge machine includes the pumps provided independently of each other and supplying the working fluid to the gap between the wire electrode and the workpiece through the upper nozzle and the lower nozzle, respectively, and the working fluid supply control apparatus includes: the pressure setting section that sets the target value for the pressure of the working fluid supplied through each of the upper and lower nozzles in accordance with the electric discharge machining condition; the pressure detection section that detects the pressure of the working fluid supplied through each of the upper and lower nozzles; and the working fluid supply control section that controls the supply amount of the working fluid supplied by each of the pumps through each of the upper and lower nozzles independently so that the value of the pressure of the working fluid through each of the upper and lower nozzles detected by the pressure detection section follows the target value for the pressure of the working fluid through each of the upper and lower nozzles set by the pressure setting section.

The pressure setting section may be configured to set the pressure of the working fluid supplied through each of the upper and lower nozzles based on number of discharge pulses per unit time or unit distance during electric discharge machining.

Furthermore, the pressure setting section may be configured to set the value of the pressure smaller as the number of discharge pulses per unit time or unit distance during the electric discharge machining is smaller, and to set the value of the pressure larger as the number of discharge pulses per unit time or unit distance during the electric discharge machining is larger.

The pressure setting section may be configured to set the pressure of the working fluid supplied through each of the upper and lower nozzles based on a mean value of a discharge pulse current per unit time or unit distance during electric discharge machining. Furthermore, the pressure setting section may be configured to set the value of the pressure smaller as the mean value of the discharge pulse current per unit time or unit distance during the electric discharge machining is smaller, and to set the value of the pressure larger as the mean value of the discharge pulse current per unit time or unit distance during the electric discharge machining is larger.

The pressure setting section may be configured to set the pressure of the working fluid supplied through each of the upper and lower nozzles based on the value of the pressure value of the working fluid controlled during electric discharge machining. Furthermore, the pressure setting section may be configured to set the value of the pressure smaller when the value of the pressure of the working fluid controlled during the electric discharge machining is smaller, and to set the value of the pressure larger when the value of the pressure of the working fluid controlled during the electric discharge machining is larger.

The pressure setting section may be configured to set the pressure of the working fluid supplied through each of the upper and lower nozzles based on an amount of the working fluid controlled during electric discharge machining. Furthermore, the pressure setting section may be configured to set the value of the pressure smaller as the amount of working fluid controlled during the electric discharge machining is larger, and to set the value of the pressure larger as the amount of working fluid controlled during the electric discharge machining is smaller.

An aspect of the present invention can provide a working fluid supply control apparatus for a wire electric discharge machine which enables stable electric discharge machining even in a machining path in which an electric discharge machining condition varies.

### BRIEF DESCRIPTION OF THE DRAWINGS

The above-described and other objects and features of the present invention will be apparent from the following description of an embodiment with reference to the attached drawings, in which:
FIG. 1 is a schematic block diagram of a wire electric discharge machine including a working fluid supply control apparatus according to an embodiment of the present invention;
FIG. 2 is a flowchart illustrating a process of generating a command value for an upper working fluid amount by the working fluid supply control apparatus according to the embodiment of the present invention;
FIG. 3 is a flowchart illustrating a process of generating a command value for a lower working fluid amount by the working fluid supply control apparatus according to the embodiment of the present invention;
FIG. 4A is an explanatory diagram of a method of calculating a target value for the pressure of a working fluid (upper working fluid pressure) supplied through an upper nozzle;
FIG. 4B is an explanatory diagram of a method of calculating a target value for the pressure of a working fluid (lower working fluid pressure) supplied through a lower nozzle;
FIGS. 5A and 5B illustrate that, when step shaping involving a change in the plate thickness of a workpiece is performed, the opposite distance between the nozzle (upper nozzle in FIG. 5A and lower nozzle in FIG. 5B) and the workpiece changes;
FIG. 6 illustrates a relative positional relation between a wire and the workpiece resulting from the step shaping;
FIG. 7 is a graph illustrating changes in the pressure and flow rate (upper working fluid pressure and upper working fluid amount) of the working fluid supplied through the upper nozzle in a case where the step shaping is performed as illustrated in FIG. 6;
FIG. 8 is a graph illustrating changes in the pressure and flow rate (lower working fluid pressure and lower working fluid amount) of the working fluid supplied through the lower nozzle in a case where the step shaping is performed as illustrated in FIG. 6;
FIG. 9 illustrates an example of conventional control over the supply of a working fluid;
FIG. 10 illustrates wire vibration resulting from the supply of the working fluid under the conventional working fluid supply control; and
FIG. 11 illustrates wear of a wire electrode.

### DETAILED DESCRIPTION OF THE PREFERRED EMBODIMENTS

An embodiment of the present invention will be described below with reference to the drawings. Constituent components of the embodiment which are identical or similar to those described in relation to the conventional techniques are denoted by the same reference characters.

Pumps that supply a working fluid through an upper nozzle and a lower nozzle, respectively, are provided in a machining gap between a wire and a workpiece independently of each other. The pressure of the working fluid supplied through each of the upper and lower nozzles is detected using a pressure gauge. The supply amounts of the working fluid from the pumps are independently controlled such that each detected pressure value follows a "target pressure value for the working fluid supplied through each of the upper and lower nozzles".

Furthermore, the wire electric discharge machine introduces a discharge pulse current to perform electric discharge machining while applying a voltage to the machining gap, and calculates the number of discharge pulses per unit time or unit distance. In this regard, the "target pressure value for the working fluid supplied through each of the upper and lower nozzles" is set in accordance with the count value that is the number of discharge pulses per unit time or unit distance during the electric discharge machining or the detection value of the pressure of the working fluid supplied through each of the upper and lower nozzles.

In other words, the target value can be set for the pressure of the working fluid supplied through each of the upper and lower nozzles in accordance with an electric discharge machining condition. The supply amount of the working fluid from each of the pumps can be independently controlled such that each of the detected pressure values follows the target pressure value for the working fluid supplied through the corresponding one of the upper and lower nozzles. Hence, stable electric discharge machining can be achieved even in a machining path in which the electric discharge machining condition varies. Furthermore, the pressure and flow rate of the working fluid supplied through each of the upper and lower nozzles can be controlled so as to suppress wire vibration, allowing improvement of machining accuracy and suppression of generation of machining stripes.

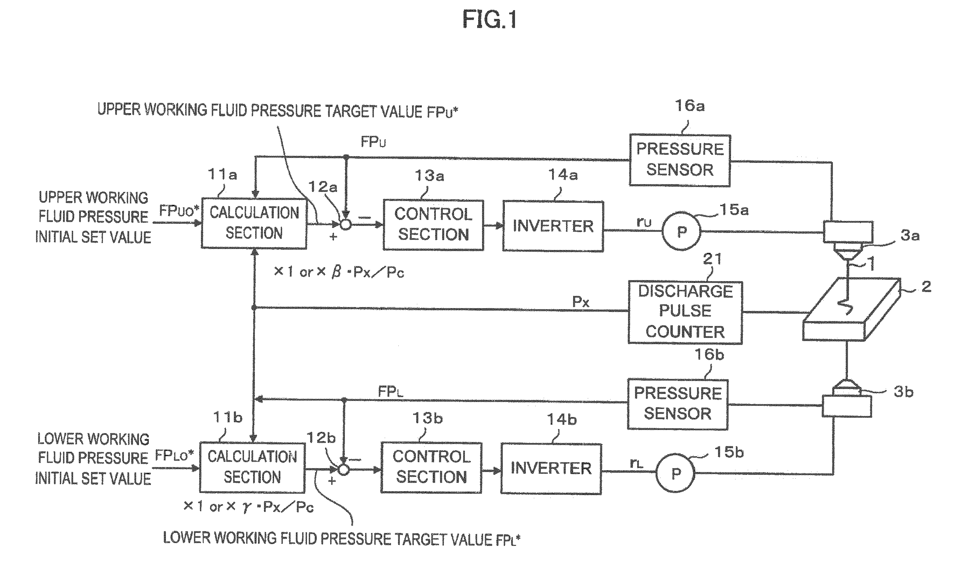

FIG. 1 is a schematic block diagram of a wire electric discharge machine including a working fluid supply control apparatus according to an embodiment of the present invention.

In the wire electric discharge machine, a wire electrode (wire 1) is threaded between an upper nozzle 3a and a lower nozzle 3b. With a working fluid supplied into a machining gap between the wire 1 and the workpiece 2 from the upper nozzle 3a and the lower nozzle 3b, electric discharge machining is performed on the workpiece 2 while moving the wire 1 and the workpiece 2 relative to each other.

An upper working fluid pressure target value calculation section 11a reads an upper working fluid pressure initial set value FPuo* and outputs the read upper working fluid pressure initial set value FPuo* to a subtractor 12a when control is started (first control period). During each of subsequent control periods, the upper working fluid pressure target value calculation section 11a calculates an upper working fluid pressure target value FPu* based on an upper working fluid pressure detection value FPu fed back from a pressure sensor 16a and the number of discharge pulses per unit time or unit distance fed back from a discharge pulse counter 21. The upper working fluid pressure target value calculation section 11a then outputs the resultant upper working fluid pressure target value FPu* to the subtractor 12a.

The subtractor 12a subtracts the upper working fluid pressure detection value FPu fed back from the pressure sensor 16a, from the upper working fluid pressure target value FPu* output by the upper working fluid pressure target value calculation section 11a (during the first control period, the upper working fluid pressure initial set value FPuo*). The subtractor 12a outputs the result of the subtraction to a control section 13a.

The control section 13a is a feedback control circuit for the target value for the upper working fluid pressure (the pressure of the working fluid supplied through the upper nozzle) and the detection value of the upper working fluid pressure. The control section 13a uses the difference between the target value for the upper working fluid pressure input from the subtractor 12a (upper working fluid pressure target value FPu*; during the first control period, the upper working fluid pressure initial set value FPuo*) and the upper working fluid pressure detection value FPu to generate a current command value to be transmitted to an inverter 14a as a command. The control section 13a outputs the generated current command value to the inverter 14a.

Based on the current command value received from the control section 13a, the inverter 14a generates an upper working fluid pump rotation number/voltage command value r_{U} that allows control over the number of rotations of a pump 15a that supplies the upper working fluid supplied through the upper nozzle 3a. The inverter 14a outputs the generated upper working fluid pump rotation number/voltage command value r_{U} to the pump 15a.

The pressure sensor 16a for the upper working fluid detects the upper working fluid pressure during electric discharge machining and feeds back the upper working fluid pressure to the upper working fluid pressure target value calculation section 11a and the subtractor 12a as the upper working fluid pressure detection value FPu. The pressure sensor 16a detects the fluid pressure of the working fluid supplied through the upper nozzle 3a to thereby acquire the upper working fluid pressure detection value FPu. As described above, the upper working fluid pressure target value calculation section 11a receives the upper working fluid pressure detection value FPu detected by the pressure sensor 16a and the number of discharge pulses per unit time or unit distance calculated by the discharge pulse counter 21. The upper working fluid pressure target value calculation section 11a thus calculates and outputs the upper working fluid pressure target value FPu*.

A lower working fluid pressure target value calculation section 11b reads a lower working fluid pressure initial set value FP_{LO}* and outputs the read lower working fluid pressure initial set value FP_{LO}* to a subtractor 12b when control is started (first control period). During each of the subsequent control periods, the lower working fluid pressure target value calculation section 11b calculates a lower working fluid pressure target value FP_{L}* based on a lower working fluid pressure detection value FP_{L} fed back from a pressure sensor 16b and the number of discharge pulses per unit time or unit distance fed back from the discharge pulse counter 21. The lower working fluid pressure target value calculation section 11b then outputs the resultant lower working fluid pressure target value FP_{L}* to the subtractor 12b.

The subtractor 12b subtracts the lower working fluid pressure detection value FP_{L} fed back from the pressure sensor 16b, from the lower working fluid pressure target value FP_{L}* output by the lower working fluid pressure target value calculation section 11b (during the first control period, the lower working fluid pressure initial set value FP_{LO}*). The subtractor 12b outputs the result of the subtraction to a control section 13b.

The control section 13b is a feedback control circuit for the target value for the lower working fluid pressure and the detection value of the lower working fluid pressure. The control section 13b uses the difference between the target value for the lower working fluid pressure input from the subtractor 12b (lower working fluid pressure target value FP_{L}*; during the first control period, the lower working fluid pressure initial set value FP_{LO}*) and the lower working fluid pressure detection value FP_{L} to generate a current command value to be transmitted to for an inverter 14b as a command. The control section 13b outputs the generated current command value to the inverter 14b.

Based on the current command value received from the control section 13b, the inverter 14b generates a lower working fluid pump rotation number/voltage command value r_{L} that allows control over the number of rotations of a pump 15b that supplies the lower working fluid supplied through the lower nozzle 3b. The inverter 14b outputs the generated lower working fluid pump rotation number/voltage command value r_{L} to the pump 15b.

The pressure sensor 16b for the lower working fluid detects the lower working fluid pressure during electric discharge machining and feeds back the lower working fluid pressure to the lower working fluid pressure target value calculation section 11b and the subtractor 12b as the lower working fluid pressure detection value FP_{L}. The pressure sensor 16b detects the fluid pressure of the working fluid supplied through the lower nozzle 3b to thereby acquire the lower working fluid pressure detection value FP_{L}. As described above, the lower working fluid pressure target value calculation section 11b receives the lower working fluid pressure detection value FP_{L} detected by the pressure sensor 16b and the number of discharge pulses per unit time or unit distance calculated by the discharge pulse counter 21. The lower working fluid pressure target value calculation section 11b thus calculates and outputs the lower working fluid pressure target value FP_{L}*.

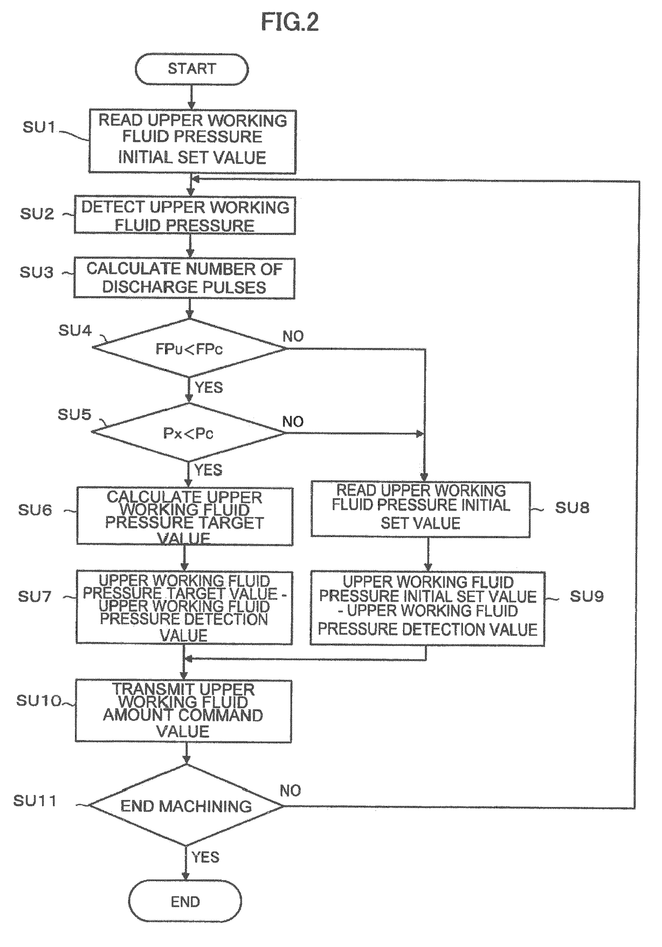

FIG. 2 is a flowchart illustrating a process of generating a command value for the upper working fluid amount by the working fluid supply control apparatus according to the embodiment of the present invention.

The initial set value of the upper working fluid pressure is read (step SU1). The upper working fluid pressure during electric discharge machining is detected (step SU2). The number of discharge pulses per unit time or unit distance during electric discharge machining is calculated (step SU3). Moreover, the detection value FPu of the upper working fluid pressure is compared with a control start working fluid pressure FPc (step SU4).

When the result of the comparison in step SU4 indicates that the detection value FPu of the upper working fluid pressure is smaller than the control start working fluid pressure FPc (FPu < FPc), then the number of discharge pulses Px per unit time or unit distance is compared with the number of control start discharge pulses Pc (step SU5). When the number of discharge pulses Px is smaller than the number of control start discharge pulses Pc (Px < Pc), the target value for the upper working fluid pressure is calculated (step SU6). The upper working fluid pressure detection value detected in step SU2 is subtracted from the calculated upper working fluid pressure target value to determine the difference (step SU7). The process then proceeds to step SU10. During each of the second and subsequent control periods, the upper working fluid pressure target value is calculated in step SU6 based on the upper working fluid pressure detection value from the pressure sensor 16a and the number of discharge pulses per unit time or unit distance fed back from the discharge pulse counter 21.

On the other hand, when the result of the comparison in step SU4 indicates that the detection value FPu of the upper working fluid pressure is not smaller than the control start working fluid pressure FPc (FPu ≥ FPc) or when the result of the comparison in step SU5 indicates that the number of discharge pulses Px is not smaller than the number of control start discharge pulses Pc (Px ≥ Pc), the upper working fluid pressure initial set value is read again (step SU8). The upper working fluid pressure detection value detected in step SU2 is subtracted from the read upper working fluid pressure initial set value to determine the difference (step SU9). The process then proceeds to step SU10.

In step SU10, the command value for the upper working fluid amount is generated. In step SU11, whether or not the machining ends is determined. When the machining ends, the process of generating the command value for the upper working fluid amount is ended. When the machining does not end, the process returns to step SU2 to continue the process of generating the command value for the upper working fluid amount.

The control over the upper working fluid has been described, and control over the lower working fluid is similarly performed. Hence, the pressure and flow rate of the working fluid supplied through each of the upper and lower nozzles can be independently controlled. The supply of the upper working fluid may be controlled using the embodiment of the present invention whereas the supply of the lower working fluid may be controlled using the conventional technique. Alternatively, the supply of the lower working fluid may be controlled using the embodiment of the present invention whereas the supply of the upper working fluid may be controlled using the conventional technique.

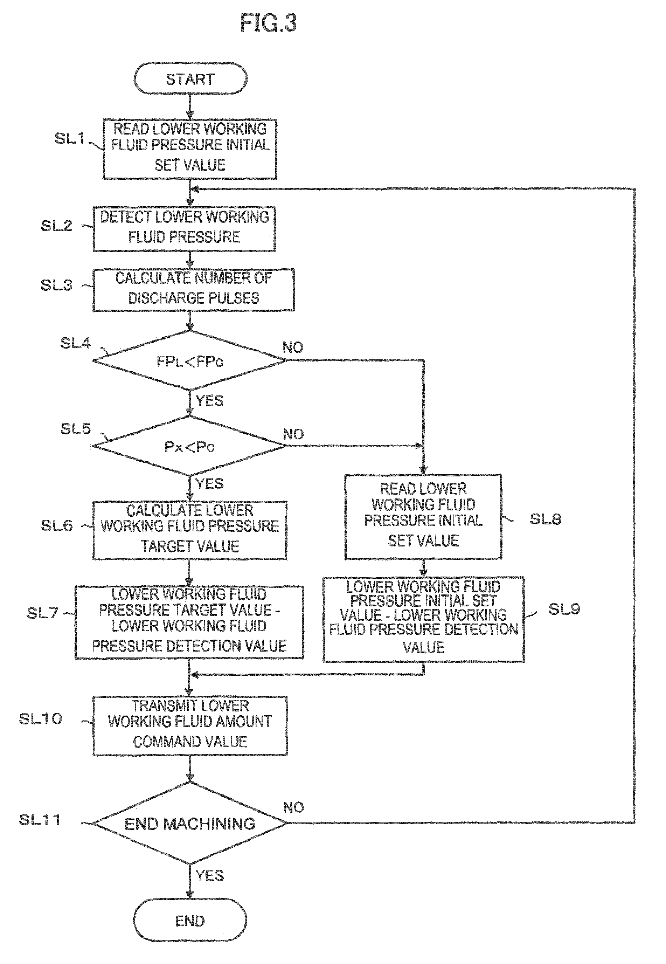

FIG. 3 is a flowchart illustrating a process of generating a command value for the lower working fluid amount by the working fluid supply control apparatus according to the embodiment of the present invention.

The initial set value of the lower working fluid pressure is read (step SL1). The lower working fluid pressure during electric discharge machining is detected (step SL2). The number of discharge pulses per unit time or unit distance during electric discharge machining is calculated (step SL3). Moreover, the detection value FP_{L} of the lower working fluid pressure is compared with the control start working fluid pressure FPc (step SL4).

When the result of the comparison in step SL4 indicates that the detection value FP_{L} of the lower working fluid pressure is smaller than the control start working fluid pressure FPc (FP_{L} < FPc), then the number of discharge pulses Px per unit time or unit distance is compared with the number of control start discharge pulses Pc (step SL5). When the number of discharge pulses Px is smaller than the number of control start discharge pulses Pc (Px < Pc), the target value for the lower working fluid pressure is calculated (step SL6). The lower working fluid pressure detection value detected in step SL2 is subtracted from the calculated lower working fluid pressure target value to determine the difference (step SL7). The process then proceeds to step SL10. During each of the second and subsequent control periods, the lower working fluid pressure target value is calculated in step SL6 based on the lower working fluid pressure detection value from the pressure sensor 16a and the number of discharge pulses per unit time or unit distance fed back from the discharge pulse counter 21.

On the other hand, when the result of the comparison in step SL4 indicates that the detection value FP_{L} of the lower working fluid pressure is not smaller than the control start working fluid pressure FPc (FP_{L} ≥ FPc) or when the result of the comparison in step SL5 indicates that the number of discharge pulses Px is not smaller than the number of control start discharge pulses Pc (Px ≥ Pc), the lower working fluid pressure initial set value is read again (step SL8). The lower working fluid pressure detection value detected in step SL2 is subtracted from the read lower working fluid pressure initial set value to determine the difference (step SL9). The process then proceeds to step SL10.

In step SL10, the command value for the lower working fluid amount is generated. In step SL11, whether or not the machining ends is determined. When the machining ends, the process of generating the command value for the lower working fluid amount is ended. When the machining does not end, the process returns to step SL2 to continue the process of generating the command value for the lower working fluid amount.

In the embodiment of the working fluid supply control apparatus according to the present invention, the calculation of the number of discharge pulses performed by the discharge pulse counter 21 (processing in step SU3 in the flowchart in FIG. 2 and processing in step SL3 in the flowchart in FIG. 3) may be replaced with measurement of a discharge pulse current performed by a discharge pulse current measurement unit. That is, in the wire electric discharge machine illustrated in the block diagram in FIG. 1, the discharge pulse counter 21 may be replaced with the discharge pulse current measurement unit. Moreover, the amounts of the working fluid supplied by the pumps 15a and 15b may be adjusted using servo amplifiers or the like instead of the inverters 14a and 14b. Furthermore, the working fluid amounts may be adjustable using flow valves.

Moreover, in the wire electric discharge machine illustrated in the block diagram in FIG. 1, the pressure sensors 16a and 16b that detect the working fluid pressures may be replaced with flow sensors that detect the working fluid amounts. This is because each of the working fluid amounts can be converted into the working fluid pressure based on a quantitative relation between the working fluid amount and the working fluid pressure.

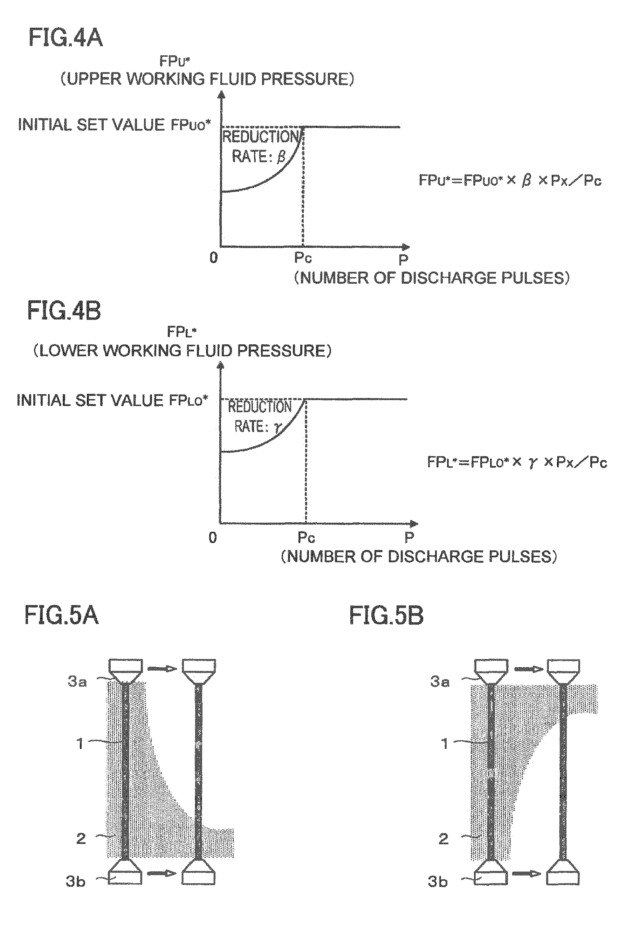

FIG. 4A is an explanatory diagram of a method of calculating a target value for the upper working fluid pressure, and FIG. 4B is an explanatory diagram of a method of calculating a target value for the lower working fluid pressure.

The pressure of the working fluid supplied through each of the upper and lower nozzles is calculated in accordance with the number of discharge pulses so as to set the pressure value smaller as the number of discharge pulses per unit time or unit distance is smaller or to set the pressure value larger as the number of discharge pulses per unit time or unit distance is larger during electric discharge machining. Furthermore, the supply amount of the working fluid supplied by each of the pumps according to the present invention is controlled when the number of discharge pulses per unit time or unit distance during electric discharge machining is smaller than the number of control start discharge pulses.

FIG. 5A and FIG. 5B illustrate that, when step shaping involving a change in the plate thickness of the workpiece 2 is performed using the conventional technique, the opposite distance between the nozzle (the upper nozzle 3a in FIG. 5A or the lower nozzle 3b in FIG. 5B) and the workpiece 2 changes. When machining involving an increase in the opposite distance between the nozzle 3a or 3b and the workpiece 2 (in other words, machining of a thin plate portion) is performed, maintaining the working fluid pressure constant leads to an increase in working fluid amount. However, the increase in the working fluid amount increases the degree of wire vibration, thus degrading machining accuracy.

By contrast, when the control over the supply amount of the working fluid from each of the pumps according to the present invention is used, the pressure of the working fluid supplied through each of the upper and lower nozzles can be detected so that, when the detected pressure is equal to or smaller than a predetermined pressure value, the target value for the working fluid pressure can be reduced in accordance with the number of discharge pulses. In other words, according to the present invention, the pressure and flow rate of the working fluid supplied through each of the upper and lower nozzles can be controlled depending on the step shape of the workpiece. This in turn allows the machining accuracy to be improved.

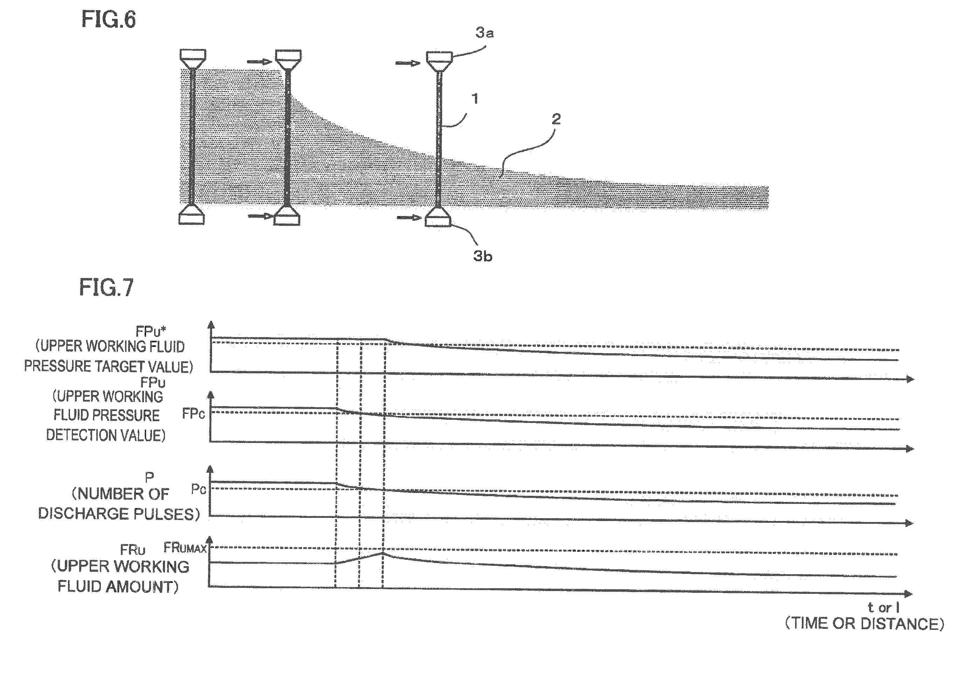

FIG. 6 illustrates a relative positional relation between the wire 1 and the workpiece 2 resulting from the step shaping.

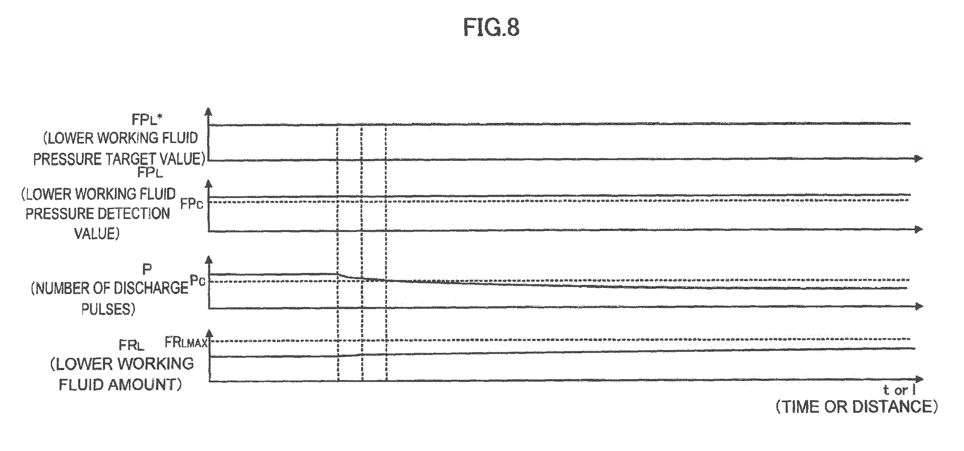

FIG. 7 is a graph illustrating changes in the pressure and flow rate of the working fluid supplied through the upper nozzle (upper working fluid pressure and upper working fluid amount) in a case where the step shaping is performed as illustrated in FIG. 6. FIG. 8 is a graph illustrating changes in the pressure and flow rate of the working fluid supplied through the lower nozzle (lower working fluid pressure and lower working fluid amount) which changes in a case where the step shaping is performed as illustrated in FIG. 6.

Possible vibration of the wire can be suppressed by independently controlling the upper working fluid pressure, the upper working fluid amount, the lower working fluid pressure, and the lower working fluid amount in accordance with the electric discharge machining condition as illustrated in FIG. 6, FIG. 7, and FIG. 8 to suppress an increase in the working fluid amount in the machining path in which the working fluid pressure decreases.

The present invention is definitely different from the techniques described in Japanese Patent Application Laid-Open Nos. 2002-254250, 4-261713, and 6-39645 in that the target value is set for the pressure of the working fluid supplied through each of the upper and lower nozzles in accordance with the machining condition such as the number of discharge pulses and that the flow rate of the working fluid supplied through each of the upper and lower nozzles is controlled so that the detection value follows the set target value for the pressure of the working fluid supplied through each of the upper and lower nozzles.

## Claims

1. A working fluid supply control apparatus for a wire electric discharge machine including a first pump that supplies a working fluid to a gap between a wire electrode and a workpiece through an upper nozzle and a second pump, provided independently of the first pump, that supplies a working fluid to the gap through a lower nozzle, the working fluid supply control apparatus comprising:
a pressure setting section that sets a target value for a pressure of the working fluid supplied through each of the upper and lower nozzles in accordance with an electric discharge machining condition;
a pressure detection section that detects the pressure of the working fluid supplied through each of the upper and lower nozzles; and
a working fluid supply control section that controls a supply amount of the working fluid supplied by each of the pumps through each of the upper and lower nozzles independently so that a value of the pressure of the working fluid through each of the upper and lower nozzles detected by the pressure detection section follows the target value for the pressure of the working fluid through each of the upper and lower nozzles set by the pressure setting section.

2. The working fluid supply control apparatus for the wire electric discharge machine according to claim 1, wherein the pressure setting section is configured to set the pressure of the working fluid supplied through each of the upper and lower nozzles based on number of discharge pulses per unit time or unit distance during electric discharge machining.

3. The working fluid supply control apparatus for the wire electric discharge machine according to claim 2, wherein the pressure setting section is configured to set the value of the pressure smaller as the number of discharge pulses per unit time or unit distance during the electric discharge machining is smaller, and to set the value of the pressure larger as the number of discharge pulses per unit time or unit distance during the electric discharge machining is larger.

4. The working fluid supply control apparatus for the wire electric discharge machine according to claim 1, wherein the pressure setting section is configured to set the pressure of the working fluid supplied through each of the upper and lower nozzles based on a mean value of a discharge pulse current per unit time or unit distance during electric discharge machining.

5. The working fluid supply control apparatus for the wire electric discharge machine according to claim 4, wherein the pressure setting section is configured to set the value of the pressure smaller as the mean value of the discharge pulse current per unit time or unit distance during the electric discharge machining is smaller, and to set the value of the pressure larger as the mean value of the discharge pulse current per unit time or unit distance during the electric discharge machining is larger.

6. The working fluid supply control apparatus for the wire electric discharge machine according to claim 1, wherein the pressure setting section is configured to set the pressure of the working fluid supplied through each of the upper and lower nozzles based on the value of the pressure of the working fluid controlled during electric discharge machining.

7. The working fluid supply control apparatus for the wire electric discharge machine according to claim 6, wherein the pressure setting section is configured to set the value of the pressure smaller when the value of the pressure of the working fluid controlled during the electric discharge machining is smaller, and to set the value of the pressure larger when the value of the pressure of the working fluid controlled during the electric discharge machining is larger.

8. The working fluid supply control apparatus for the wire electric discharge machine according to claim 1, wherein the pressure setting section is configured to set the pressure of the working fluid supplied through each of the upper and lower nozzles based on an amount of the working fluid controlled during electric discharge machining.

9. The working fluid supply control apparatus for the wire electric discharge machine according to claim 8, wherein the pressure setting section is configured to set the value of the pressure smaller as the amount of working fluid controlled during the electric discharge machining is larger, and to set the value of the pressure larger as the amount of working fluid controlled during the electric discharge machining is smaller.
